# EUROPÄISCHE PATENTSCHRIFT

(11) **EP 2 981 746 B1**
(45) Veröffentlichungstag und Bekanntmachung des Hinweises auf die Patenterteilung: **10.05.2017**
(21) Anmeldenummer: 14709278.7
(22) Anmeldetag: 11.03.2014
(51) Int. Cl.: F16J 15/34

(54) **GLEITRINGDICHTUNGSANORDNUNG MIT UNTERSCHIEDLICH HARTEN GLEITFLÄCHEN**
MECHANICAL SEAL ARRANGEMENT HAVING SLIDING SURFACES OF DIFFERING HARDNESS
SYSTÈME DE GARNITURE D'ÉTANCHÉITÉ À ANNEAU GLISSANT AYANT DES SURFACES DE GLISSEMENT DE DURETÉS DIFFÉRENTES

(30) Priorität: 04.04.2013 DE 102013005926
(43) Veröffentlichungstag der Anmeldung: 10.02.2016
(73) Patentinhaber: EagleBurgmann Germany GmbH & Co. KG, 82515 Wolfratshausen (DE)
(72) Erfinder: OTSCHIK, Joachim, 82547 Beuerberg (DE); KRETSCHMER, Andreas, 82538 Geretsried (DE); SCHOLZ, Carsten, 82547 Eurasburg (DE); SCHICKTANZ, Rudolf, 82538 Geretsried (DE); SCHRÜFER, Andreas, 82515 Wolfratshausen (DE)
(74) Vertreter: Hoefer & Partner Patentanwälte mbB
(86) Internationale Anmeldenummer: PCT/EP2014/054658
(87) Internationale Veröffentlichungsnummer: WO 2014/161704

(56) Entgegenhaltungen:
- DE-A1- 19 922 665
- DE-U1-202006 006 425
- DE-U1-202010 011 173

## Beschreibung

Die vorliegende Erfindung betrifft eine Gleitringdichtungsanordnung mit Gleitringen, welche unterschiedliche Härten und unterschiedliche Anfangsrauheiten aufweisen.

Gleitringdichtungsanordnungen sind aus dem Stand der Technik in unterschiedlichen Ausgestaltungen bekannt. Beispielsweise ist es bekannt, Gleitringen von Gleitringdichtungen mit einer Diamantbeschichtung zu versehen. (vergleiche DE 202007016868 U1; DE 202010011173 U1). Ferner offenbart die US 2010/0061676 A1 eine Gleitringdichtung mit einer DLC-Beschichtung mit reinem Wasser als Gleitschmiermittel. Häufig werden im Bereich von Gleitringdichtungsanordnungen jeweils gleiche Gleitringe aus gleichem Material, d.h. mit Gleitflächen mit gleichen Härten, verwendet, da sonst erwartet wird, dass bei Verwendung von Gleitflächen mit großen unterschiedlichen Härten ein hoher Verschleiß am weicheren Gleitring auftreten würde. Von daher werden Gleitringdichtungsanordnungen bisher derart ausgelegt, dass die Gleitpartner die gleiche Härte aufweisen.

Bei der Verwendung von diamantbeschichteten Gleitflächen bei Gleitringen ergibt sich jedoch insbesondere das Problem der hohen Kosten. Allerdings weisen diamantbeschichtete Gleitringe eine sehr hohe Widerstandsfähigkeit gegen Abrieb und damit eine besonders lange Lebensdauer auf.

Es daher Aufgabe der vorliegenden Erfindung, eine Gleitringdichtungsanordnung bereitzustellen, welche bei einfachem Aufbau und einfacher, kostengünstiger Herstellbarkeit trotzdem die Möglichkeit einer Verwendung einer diamantbeschichteten Gleitfläche ermöglicht.

Diese Aufgabe wird durch eine Gleitringdichtungsanordnung mit den Merkmalen des Anspruchs 1 gelöst. Die Unteransprüche zeigen bevorzugte Weiterbildungen der Erfindung.

Die erfindungsgemäße Gleitringdichtungsanordnung umfasst vorzugsweise ein rotierenden Gleitring mit einer ersten Gleitfläche und einen stationären Gleitring mit einer zweiten Gleitfläche. Zwischen den beiden Gleitflächen ist ein Dichtspalt definiert. Hierbei weisen die beiden Gleitflächen unterschiedliche Härten auf, wobei eine der beiden Gleitflächen eine Diamantbeschichtung aufweist und die andere der beiden Gleitflächen aus Kohleverbundwerkstoff ist. Der Kohleverbundwerkstoff ist ein Siliziumcarbid-Graphit-Verbundwerkstoff (SiC-C). Der Kohleverbundwerkstoff ist somit ein Verbundwerkstoff aus Graphit und Silizium, wobei vorzugsweise flüssiges Silizium in einen porösen Graphitkörper eingebracht wird, wobei sich Siliziumcarbid in den freien Poren bildet. Dieser Siliziumcarbid-Bildungsprozess wird so lange fortgesetzt, bis die Poren vollständig mit Siliziumcarbid ausgefüllt sind. Hierbei kann auch noch eine gewisse Restmenge von freiem Silizium im Kohleverbundwerkstoff verbleiben. Ferner ist eine erfindungsgemäße Anfangsrauheit der Gleitflächen mit Diamantbeschichtung kleiner als eine Anfangsrauheit der Gleitfläche aus Kohleverbundwerkstoff. Unter Anfangsrauheit wird dabei eine mittlere Rauheit Rₐ verstanden, welche die beiden Gleitflächen im neuwertigen Zustand haben. Da die Gleitflächen unterschiedliche Härten aufweisen, ist die Anfangsrauheit der härteren Gleitfläche kleiner gewählt als die Anfangsrauheit der weicheren Gleitfläche aus Kohleverbundwerkstoff.

Besonders bevorzugt ist die Anfangsrauheit der härteren Gleitfläche mit Diamantbeschichtung um mindestens 50% kleiner als die Anfangsrauheit der Gleitfläche aus Kohleverbundwerkstoff. Hierdurch wird sichergestellt, dass insbesondere auch in einer Einlaufphase der Gleitringdichtungsanordnung keine Beschädigung der weicheren Gleitfläche durch die härtere Gleitfläche erfolgt.

Weiter bevorzugt ist eine mittlere Rauheit Rₐ der die Diamantbeschichtung aufweisenden Gleitfläche in einem Bereich 0,01 µm bis 0,06 µm und/oder eine mittlere Rauheit Rₐ der Gleitfläche aus Kohleverbundwerkstoff ist an einem Bereich von 0,1 µm bis 0,2 µm. Vorzugsweise ist die mittlere Rauheit Rₐ der Gleitfläche mit Diamantbeschichtung in einem Bereich von 0,02 µm bis 0,05 µm. Weiter bevorzugt ist die mittlere Rauheit der Gleitfläche aus Kohleverbundwerkstoff in einem Bereich von 0,12 µm bis 0,18 µm.

Weiter bevorzugt weist die Diamantbeschichtung eine Dotierung derart auf, dass die Diamantbeschichtung elektrisch leitfähig ist. Hierdurch ist die elektrisch leitfähige Diamantbeschichtung insbesondere für Gleitringdichtungsanordnungen geeignet, bei denen das abzudichtende Medium Wasser, insbesondere reines Wasser, z.B. im Kraftwerksbereich, ist. Besonders bevorzugt ist die Dotierung der Diamantschicht zur Erzeugung einer elektrisch leitfähigen Diamantschicht eine Bor-Dotierung.

Besonders bevorzugt ist die Diamantbeschichtung des Gleitrings zusätzlich auch an einem äußeren Umfangsbereich des Gleitrings vorgesehen. Die Diamantbeschichtung ist hierbei besonders bevorzugt nur teilweise am äußeren Umfangsbereich vorgesehen. Weiter bevorzugt verjüngt sich die Diamantbeschichtung am äußeren Umfangsbereich in einer von der Gleitfläche des Gleitrings abgewandten Richtung. Durch das Vorsehen der Diamantbeschichtung am äußeren Umfangsbereich kann insbesondere erreicht werden, dass das Grundmaterial des Gleitrings durch die Diamantbeschichtung vor einem abzudichtenden Medium, beispielsweise reines Wasser, geschützt ist. Weiter bevorzugt ist ein Trägerring vorgesehen, welcher die am äußeren Umfangsbereich des Gleitrings vorgesehene Diamantbeschichtung überdeckt. Hierdurch wird vermieden, dass ein eventuell aggressives Medium an das Grundmaterial, insbesondere SiC, des Gleitrings gelangt.

Gemäß einer weiteren bevorzugten Ausgestaltung der Erfindung ist die Diamantbeschichtung des Gleitrings zusätzlich auch an einem inneren Umfangsbereich des Gleitrings vorgesehen. Hierbei ist weiter bevorzugt die Diamantbeschichtung nur teilweise am inneren Umfangsbereich ausgebildet und insbesondere verjüngt sich die Diamantbeschichtung am inneren Umfangsbereich in einer von der Gleitfläche abgewandten Richtung.

Weiter bevorzugt umfasst der Kohleverbundwerkstoff 60 bis 75 Gew.% Siliziumcarbid, 15 bis 40 Gew.% Kohlenstoff und 0,5 bis 10 Gew.% freies Silizium. Besonders bevorzugt umfasst der Kohleverbundwerkstoff 62 Gew.% Siliziumcarbid, 35 Gew.% Kohlenstoff und 3 Ges.% freies Silizium.

Weiter bevorzugt ist die Gleitfläche der Diamantbeschichtung poliert. Hierdurch wird sichergestellt, dass die Gleitfläche mit Diamantbeschichtung eine geringe Anfangsrauheit als die Gleitfläche aus Kohleverbundwerkstoff aufweist.

Vorzugsweise weist der rotierende Gleitring die Diamantbeschichtung auf. Durch die Rotation des diamantbeschichteten Gleitrings kann insbesondere ein sehr gleichmäßiges Wärmeausdehnungsverhalten und eine gleichmäßige Kühlung des rotierenden Gleitrings sichergestellt werden, so dass insbesondere wärmebedingte Beschädigungen vermieden werden können.

Weiter bevorzugt ist ein Traganteil einer Oberfläche der diamantbeschichteten Gleitfläche mindestens größer 45%, insbesondere bevorzugt größer als 50% und weiter bevorzugt größer als 60%. Erfindungsgemäß wird hierbei unter dem Traganteil ein Verhältnis einer Oberfläche, welche die Summe aller glatten Bereiche der Oberfläche umfasst, zu einer Gesamtoberfläche der Gleitfläche. Die glatten Bereiche an der Oberfläche werden beispielsweise durch Polieren oder Feinpolieren der diamantbeschichteten Gleitfläche erhalten. Wenn die gesamte Oberfläche der diamantbeschichteten Gleitfläche poliert werden könnte, so dass ausschließlich ein glatter Bereich an der Oberfläche erhalten würde, wäre der Traganteil 100%.

Bevorzugt weist der Gleitring mit Diamantbeschichtung an der Diamantbeschichtung eine Vickers-Härte von ca. 10.000 HV und der Gleitring aus Kohleverbundwerkstoff weist im Bereich der harten SiC-Phase eine Vickers-Härte in einem Bereich von 2.000 HV bis 3.000 HV, vorzugsweise 2.500 Hv, auf, und im Bereich der weicheren Graphit-Phase eine Rockwell-Härte in einem Bereich von 50 bis 100 HR15T auf. Weiter bevorzugt weist der diamantbeschichtete Gleitring ein Elastizitätsmodul in einem Bereich von ca. 1.150 N/mm² auf und der Gleitring aus Kohleverbundwerkstoff ein Elastizitätsmodul in einem Bereich von 1 bis 4 N/mm² auf. Ferner bevorzugt weist der diamantbeschichtete Gleitring eine Wärmeleitfähigkeit in einem Bereich von ca. 2.000 W/mk auf und der Kohleverbundwerkstoff weist eine Wärmeleitfähigkeit in einem Bereich von 2 bis 85 W/mk auf. Bevorzugt ist eine Dicke der Diamantbeschichtung an der Gleitfläche in einem Bereich von 1 µm bis 20 µm.

Weiter bevorzugt sind an der Gleitfläche aus Kohleverbundwerkstoff graphithaltige Bereiche ausgebildet. Diese graphithaltigen Bereiche an der Oberfläche der Gleitfläche sind eingerichtet, um freie Partikel, welche sich beispielsweise im abzudichtenden Medium oder in einem Sperrmedium befinden können, aufzunehmen. Durch die graphithaltigen Bereiche an der Oberfläche der Gleitfläche aus Kohleverbundwerkstoff können somit freie Partikel aufgenommen und eingebettet werden, so dass diese keinen Schaden an der gegenüberliegenden Gleitfläche anrichten können. Selbst wenn ein derartiger freier Partikel noch teilweise aus der Gleitfläche aus Kohleverbundwerkstoff hervorstehen würde, tritt keine Beschädigung der Gleitringdichtung auf, da die Gegenfläche die Diamantbeschichtung aufweist, welche durch den nur teilweise in dem weicheren graphithaltigen Bereich aufgenommenen Partikel nicht beschädigt, z. B. geritzt oder dergleichen, werden kann. Die graphithaltigen Bereiche an der Oberfläche der Gleitfläche aus Kohleverbundwerkstoff weisen dabei eine Rockwell-Härte in einem Bereich von 50 bis 100 HR15T auf. Die freien Partikel, welche beispielsweise durch Abrieb oder dergleichen entstehen können, oder auch im abzudichtenden Medium vorhanden sein können, wenn dieses beispielsweise eine Suspension mit harten Partikeln ist, können die sehr harte Diamantbeschichtung nicht beschädigen und werden bei einem Kontakt mit der Diamantbeschichtung gegebenenfalls einfach tiefer in die Gleitfläche aus Kohleverbundwerkstoff eingedrückt oder abgeschert.

Ferner betrifft die vorliegende Erfindung eine Kraftwerksspeisepumpe umfassend eine erfindungsgemäße Gleitringdichtungsanordnung. Insbesondere bei einer Verwendung der erfindungsgemäßen Gleitringdichtungsanordnung bei Kraftwerksspeisepumpen ergeben sich große Vorteile, da die erfindungsgemäße Gleitringdichtungsanordnung sehr robust ist und eine hohe Einsatzdauer aufweist. Dadurch ist die Gefahr eines Ausfalls der Gleitringdichtungsanordnung insbesondere bei einem Kraftwerksbetrieb, welche üblicherweise auf lange Betriebsdauern zwischen zwei Wartungsintervallen ausgelegt ist, sichergestellt.

Nachfolgend wird ein bevorzugtes Ausführungsbeispiel der Erfindung unter Bezugnahme auf die begleitende Zeichnung im Detail beschrieben.

In der Zeichnung ist:
- Fig. 1: eine schematische Schnittansicht einer Gleitringdichtungsanordnung für eine Kraftwerksspeisepumpe gemäß einem Ausführungsbeispiel der Erfindung,
- Fig. 2: eine vergrößerte Schnittdarstellung der Gleitringe von Figur 1
- und Fig. 3: eine weiter vergrößerte, schematische Schnittansicht der Gleitringe von Figur 1 und 2

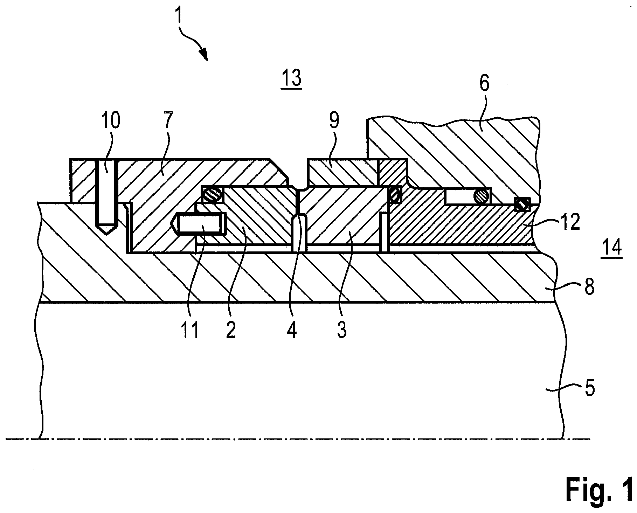

Nachfolgend wird unter Bezugnahme auf die Figuren 1 bis 3 eine Gleitringdichtungsanordnung 1 gemäß einem bevorzugten Ausführungsbeispiel der Erfindung im Detail beschrieben.

Figur 1 zeigt schematisch die Gleitringdichtungsanordnung 1 für eine Kraftwerksspeisepumpe umfassend einen rotierenden Gleitring 2 und einen stationären Gleitring 3. Zwischen den beiden Gleitringen 2, 3 ist in bekannter Weise ein Dichtspalt 4 ausgebildet. Der rotierende Gleitring 2 ist über einen rotierenden Trägerring 7 mit einer Wellenhülse 8 verbunden. Zur Drehung und Übertragung von Drehmoment sind hierbei erste und zweite Stifte 10, 11 vorgesehen. Die Wellenhülse 8 ist auf einer rotierenden Welle 5 angeordnet.

Der stationäre Gleitring 3 weist eine Bandage 9 auf, welche über einen stationären Trägerring 12 an einem Gehäuse 6 fixiert ist.

Die Gleitringdichtungsanordnung 1 dichtet dabei ein durch die Kraftwerksspeisepumpe zu förderndes Medium 13 gegenüber der Umgebung 14 ab. Das Medium 13 in diesem Ausführungsbeispiel ist reines Wasser. Aufgrund der schlechten elektrischen Leitfähigkeit des reinen Wassers und der hohen Gleitgeschwindigkeit des rotierenden Gleitrings 2 ergeben sich hohe elektrische Potentiale von mehreren Volt zwischen den Gleitringen. Die Gleitgeschwindigkeiten liegen üblicherweise zwischen 40m/s bis 60m/s.

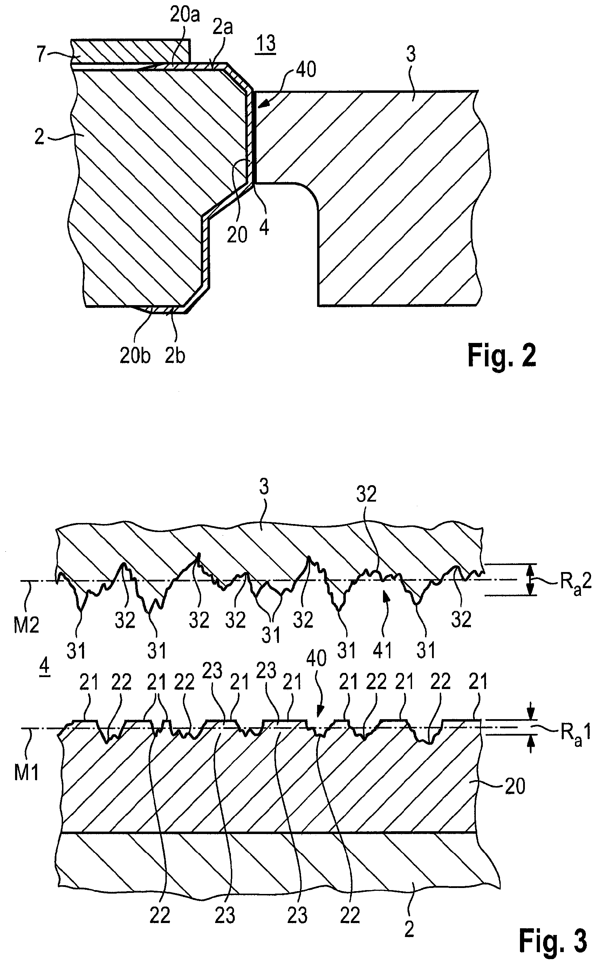

Der rotierende Gleitring 2 ist ferner mit einer Diamantbeschichtung 20 versehen. Hierbei ist die gesamte Gleitfläche 40 des rotierenden Gleitrings 2 mit Diamant beschichtet. Dies ist im Detail in den Figuren 2 und 3 gezeigt.

Die Diamantbeschichtung 20 ist dabei sowohl an einer Gleitfläche 40 des rotierenden Gleitrings 2 als auch an einem äußeren Umfangsbereich 2a und einem inneren Umfangsbereich 2b ausgebildet. Dabei ist am äußeren Umfangsbereich 2a ein sich in von der Gleitfläche 40 abgewandter Richtung verjüngender Bereich 20a ausgebildet. Am inneren Umfangsbereich 2b des Gleitrings ist in gleicher Weise ein sich in von der Gleitfläche 40 abgewandter Richtung verjüngender Bereich 20b ausgebildet. Mit anderen Worten ist die Diamantbeschichtung 20 auch teilweise am inneren und äußeren Umfang des Gleitrings vorgesehen.

Weiterhin überdeckt der rotierende Trägerring 7 den äußeren, sich verjüngenden Bereich 20a der Diamantbeschichtung teilweise. Dadurch wird sichergestellt, dass das sich am äußeren Umfang befindliche Medium 13 nicht mit dem Basismaterial des Gleitrings 2 in Kontakt kommt. Hierdurch kann der diamantbeschichtete, rotierende Gleitring auch in Medien verwendet werden, welche sehr aggressiv sind. Die Diamantbeschichtung schützt dabei das Grundmaterial des Gleitrings. Durch den sich verjüngenden Bereich 20a am äußeren Umfangsbereich des Gleitrings kann insbesondere eine sehr gute Abdichtung zwischen dem Trägerring 7 und dem sich verjüngenden Bereich 20 der Diamantbeschichtung erhalten werden.

Wie weiter aus Figur 3 ersichtlich ist, ist die Diamantbeschichtung 20 nach dem Beschichtungsvorgang einen Polierschritt unterzogen worden, so dass sich neben den noch vorhandenen Vertiefungen 22 eine Vielzahl von abgeflachten Bereichen 21 bilden. Damit die Diamantschicht elektrisch leitfähig ist, weist sie noch eine Dotierung 23 mittels Bor auf.

Der stationäre Gleitring 3 ist aus einem Kohlenstoff-Verbundwerkstoff hergestellt, welcher ca. 62 Gew.% Siliziumcarbid, ca. 35 Gew.% Graphit und einen kleinen Anteil von ca. 3 Gew.% freiem Silizium umfasst. Eine Gleitfläche 41 des stationären Gleitrings 3 weist an der Oberfläche des stationären Gleitrings eine Vielzahl von Erhebungen 31 und Vertiefungen 32 auf.

In Figur 3 ist die mittlere Rauheit Rₐ eingezeichnet. Die mittlere Rauheit Rₐ ist dabei ein arithmetischer Mittelwert aller Abweichungen des Rauheitsprofils von einer mittleren Linie. In der Diamantbeschichtung 20 ist die mittlere Linie mit M1 bezeichnet und am Rauheitsprofil des stationären Gleitrings 3 mit M2. Die mittlere Rauheit ist bei der Diamantbeschichtung 20 mit Rₐ1 gekennzeichnet und die mittlere Rauheit Rₐ ist beim stationären Gleitring 3 mit Rₐ2 gekennzeichnet.

Wie dabei ersichtlich ist, ist die mittlere Rauheit Rₐ1 der Diamantbeschichtung 20 deutlich kleiner als die mittlere Rauheit Rₐ2 des stationären Gleitrings 3 aus Kohleverbundwerkstoff. Dies ist darin begründet, dass die Oberfläche der Diamantbeschichtung 20 noch einem Polierschritt unterzogen wurde, um die abgeflachten Bereiche 21 zu bilden. Zwischen den abgeflachten Bereichen 21 sind jeweils Vertiefungen 22 vorgesehen. Der stationäre Gleitring 3 aus Kohleverbundwerkstoff wurde nicht oder weniger poliert als der diamantbeschichtete rotierende Gleitring 2.

Durch die Wahl der unterschiedlichen Materialien für den rotierenden und stationären Gleitring weist der rotierende Gleitring 2 ferner durch die Diamantbeschichtung 20 an seiner Gleitfläche 40 eine größere Härte an der Gleitfläche auf als der aus Kohlenstoff-Material hergestellte stationäre Gleitring 3. Erfindungsgemäß wurde nun durch das reduzierte Rauheitsprofil an der Diamantbeschichtung 20 erreicht, dass ein härterer rotierender Gleitring 2 gegen einen weicheren stationären Gleitring 3 laufen kann, ohne dass es hierbei zu Beschädigungen oder Abrieb oder Verschleiß oder dergleichen am weicheren stationären Gleitring 3 kommt. Durch die geringere mittlere Rauheit Rₐ1 der härteren Diamantbeschichtung 20 kann somit verhindert werden, dass ein üblicherweise bei einer derartigen Gleitringpaarung zu erwartender erhöhter Verschleiß auftritt.

Diese auch für einen Fachmann überraschende Erkenntnis ermöglicht es nun, dass Gleitringdichtungsanordnungen eingesetzt werden können, bei denen nur einer der Gleitringe, insbesondere der rotierende Gleitring 2, mit einer Diamantschicht 20 versehen wurde. Der andere, weichere Gleitring weist keine derartige harte Schicht auf, sondern weist eine Gleitfläche aus Kohleverbundwerkstoff auf. Trotzdem kann eine hohe Lebensdauer der Gleitringdichtungsanordnung 1 entsprechend einer Lebensdauer einer Gleitringdichtungsanordnung bei der beide Gleitringe eine Diamantbeschichtung aufweisen, erhalten werden.

Weiterhin stellt die Dotierung 23 in der Diamantbeschichtung 20 sicher, dass zwischen den beiden Gleitringen im Betrieb kein hohes elektrisches Potential auftritt, so dass keine Zerstörung der Gleitflächen 40, 41 durch elektrische Entladungen möglich sind.

Somit eignet sich die erfindungsgemäße Gleitringdichtungsanordnung 1 insbesondere zu Verwendung in Speisewasserpumpen von Kraftwerken, bei denen häufig auch ein Anlaufen/Anhalten und sich ständig verändernde thermische Bedingungen vorhanden sind. Trotzdem weist die erfindungsgemäße Gleitringdichtungsanordnung eine hohe Robustheit und eine lange Lebensdauer auf.

Ein Traganteil der Gleitfläche 40 der Diamantbeschichtung 20 liegt dabei bei ungefähr 60%. Der Traganteil ist dabei derart definiert als Quotient der Summe aller abgeflachten Bereiche 21 gegenüber der Gesamtfläche der Gleitfläche 40 an der Diamantbeschichtung 20 (Ringfläche).

In diesem Ausführungsbeispiel ist eine mittlere Rauheit Rₐ1 der Diamantbeschichtung 20 ungefähr 0,03 µm und eine mittlere Rauheit Rₐ2 der Gleitfläche 41 des stationären Gleitrings 3 aus Kohleverbundwerkstoff ungefähr 0,15 µm. Mit anderen Worten ist die mittlere Rauheit Rₐ2 des Kohleverbundwerkstoffs am stationären Gleitring 3 ungefähr fünfmal so hoch wie die mittlere Rauheit Rₐ1 der Diamantbeschichtung 20.

### Bezugszeichenliste

- 1: Gleitringdichtungsanordnung
- 2: rotierender Gleitring
- 2a: äußerer Umfangsbereich
- 2b: innerer Umfangsbereich
- 3: stationärer Gleitring
- 4: Dichtspalt
- 5: Welle
- 6: Gehäuse
- 7: rotierender Trägerring
- 8: Wellenhülse
- 9: Bandage
- 10: erster Stift
- 11: zweiter Stift
- 12: stationärer Trägerring
- 13: Medium
- 14: Umgebung
- 20: Diamantbeschichtung
- 20a: sich verjüngender Bereich am Aussenumfang
- 20b: sich verjüngender Bereich am Innenumfang
- 21: abgeflachte Bereiche
- 22: Vertiefungen
- 23: Bohr-Dotierung
- 31: Erhebungen
- 32: Vertiefungen
- 40: Gleitfläche Diamantbeschichtung
- 41: Gleitfläche Kohleverbundmaterial
- Rₐ1: mittlere Anfangsrauheit der Diamantbeschichtung
- Rₐ2: mittlere Anfangsrauheit des Kohleverbundwerkstoffs
- M1, M2: Bezugslinie

## Patentansprüche

1. Gleitringdichtungsanordnung umfassend:
- einen rotierenden Gleitring (2) mit einer ersten Gleitfläche (40) und einen stationären Gleitring (3) mit einer zweiten Gleitfläche (41), welche zwischen sich einen Dichtspalt (4) begrenzen,
- wobei die erste und zweite Gleitfläche unterschiedliche Härten aufweisen,
- **dadurch gekennzeichnet, dass** die härtere Gleitfläche eine Diamantbeschichtung (20) aufweist und die weichere Gleitfläche aus Kohleverbundwerkstoff hergestellt ist, wobei der Kohleverbundwerkstoff ein Siliziumcarbid-Graphit-Verbundwerkstoff umfassend Siliziumcarbid, Graphit und freies Silizium ist, und
- eine mittlere Anfangsrauheit (Rₐ1) der ersten Gleitfläche (40) der Diamantbeschichtung (20) kleiner ist als eine mittlere Anfangsrauheit (Rₐ2) der zweiten Gleitfläche (41) aus Kohleverbundwerkstoff.

2. Gleitringdichtungsanordnung nach Anspruch 1, **dadurch gekennzeichnet, dass** die mittlere Anfangsrauheit (Rₐ1) des Gleitrings mit Diamantbeschichtung (20) um mindestens 50% kleiner ist als die mittlere Anfangsrauheit (Rₐ2) des Gleitrings aus Kohleverbundwerkstoff.

3. Gleitringdichtungsanordnung nach Anspruch 2, **dadurch gekennzeichnet, dass** die mittlere Anfangsrauheit (Rₐ1) der Diamantbeschichtung (20) in einem Bereich von 0,01 µm bis 0,06 µm und/oder das die mittlere Anfangsrauheit (Rₐ2) der Gleitfläche aus Kohleverbundwerkstoff in einem Bereich von 0,1 µm bis 0,2 µm liegt.

4. Gleitringdichtungsanordnung nach einem der vorhergehenden Ansprüche, **dadurch gekennzeichnet, dass** die Diamantbeschichtung (20) eine Dotierung (23) derart aufweist, dass die Diamantbeschichtung (20) elektrisch leitfähig ist.

5. Gleitringdichtungsanordnung nach Anspruch 4, **dadurch gekennzeichnet, dass** die Dotierung (23) eine Bor-Dotierung ist.

6. Gleitringdichtungsanordnung nach einem der vorhergehenden Ansprüche, **dadurch gekennzeichnet, dass** die Diamantbeschichtung (20) des Gleitrings zusätzlich an einem äußeren Umfangsbereich (20a) des Gleitrings vorgesehen ist.

7. Gleitringdichtungsanordnung nach Anspruch 6, **dadurch gekennzeichnet, dass** die Diamantbeschichtung (20) nur teilweise am äußeren Umfangsbereich (2a) des Gleitrings vorgesehen ist und insbesondere die Diamantbeschichtung am äußeren Umfangsbereich (2a) einen sich verjüngenden Bereich (20a) aufweist.

8. Gleitringdichtungsanordnung nach Anspruch 6 oder 7, **dadurch gekennzeichnet, dass** ein Trägerring (7) die am äußeren Umfangsbereich (2a) des Gleitrings (2) vorgesehene Diamantbeschichtung zumindest teilweise überdeckt.

9. Gleitringdichtungsanordnung nach einem der Ansprüche 6 bis 8, **dadurch gekennzeichnet, dass** die Diamantbeschichtung des Gleitrings zusätzlich an einem inneren Umfangsbereich (2b) des Gleitrings vorgesehen ist.

10. Gleitringdichtungsanordnung nach einem der vorhergehenden Ansprüche, **dadurch gekennzeichnet, dass** die Gleitfläche (40) der Diamantbeschichtung (20) poliert ist.

11. Gleitringdichtungsanordnung nach einem der vorhergehenden Ansprüche, **dadurch gekennzeichnet, dass** der rotierende Gleitring (2) die Diamantbeschichtung (20) aufinreist.

12. Gleitringdichtungsanordnung nach einem der vorhergehenden Ansprüche, **dadurch gekennzeichnet, dass** die Gleitfläche (40) der Diamantbeschichtung (20) ein Traganteil von ≥ 50% aufweist.

13. Gleitringdichtungsanordnung nach einem der vorhergehenden Ansprüche, **dadurch gekennzeichnet, dass** der Kohleverbundwerkstoff 60 bis 75 Gew.% Silizumcarbid, 15 bis 40 Gew.% Kohlenstoff und 0,5 bis 10 Gew.% freies Silizium umfasst.

14. Gleitringdichtungsanordnung nach einem der vorhergehenden Ansprüche, **dadurch gekennzeichnet dass** an der Gleitfläche (41) aus Kohleverbundwerkstoff graphithaltige Bereiche , insbesondere mit einer Rockwell-Härte von 50 bis 100 HR15T, ausgebildet sind, welche zur Aufnahme von freien Partikeln eingerichtet sind.

15. Kraftwerksspeisepumpe umfassend eine Gleitringdichtungsanordnung nach einem der vorhergehenden Ansprüche.

## Claims

1. Mechanical seal arrangement comprising:
- a rotating slide ring (2) having a first slide surface (40) and a stationary slide ring (3) having a second slide surface (41) which define a sealing gap (4) between them,
- wherein the first and second slide surfaces have different hardnesses,
- **characterized in that** the harder slide surface has a diamond coating (20) and the softer slide surface is produced from carbon composite material, wherein the carbon composite material is a silicon carbide graphite composite material comprising silicon carbide, graphite and free silicon, and
- an average initial roughness (Rₐ1) of the first slide surface (40) of the diamond coating (20) is smaller than an average initial roughness (Rₐ2) of the second slide surface (41) made from carbon composite material.

2. Mechanical seal arrangement as claimed in claim 1, **characterised in that** the average initial roughness (Rₐ1) of the slide ring with the diamond coating (20) is 50% less than the average initial roughness (Rₐ2) of the slide ring made from carbon composite material.

3. Mechanical seal arrangement as claimed in claim 2, **characterised in that** the average initial roughness (Rₐ1) of the diamond coating (20) is in a range of 0.01 µm to 0.06 µm and/or that the average initial roughness (Rₐ2) of the slide surface made from carbon composite material is in a range of 0.1 µm to 0.2 µm.

4. Mechanical seal arrangement as claimed in any one of the preceding claims, **characterised in that** the diamond coating (20) has doping (23) such that the diamond coating (20) is electrically conductive.

5. Mechanical seal arrangement as claimed in claim 4, **characterised in that** the doping (23) is boron doping.

6. Mechanical seal arrangement as claimed in any one of the preceding claims, **characterised in that** the diamond coating (20) of the slide ring is additionally provided on an outer peripheral region (20a) of the slide ring.

7. Mechanical seal arrangement as claimed in claim 6, **characterised in that** the diamond coating (20) is provided only partially on the outer peripheral region (2a) of the slide ring and in particular the diamond coating on the outer peripheral region (2a) has a tapering region (20a).

8. Mechanical seal arrangement as claimed in claim 6 or 7, **characterised in that** a support ring (7) at least partially covers the diamond coating provided on the outer peripheral region (2a) of the slide ring (2).

9. Mechanical seal arrangement as claimed in any one of claims 6 to 8, **characterised in that** the diamond coating of the slide ring is additionally provided on an inner peripheral region (2b) of the slide ring.

10. Mechanical seal arrangement as claimed in any one of the preceding claims, **characterised in that** the slide surface (40) of the diamond coating (20) is polished.

11. Mechanical seal arrangement as claimed in any one of the preceding claims, **characterised in that** the rotating slide ring (2) comprises the diamond coating (20).

12. Mechanical seal arrangement as claimed in any one of the preceding claims, **characterised in that** the slide surface (40) of the diamond coating (20) has a support portion of ≥50%.

13. Mechanical seal arrangement as claimed in any one of the preceding claims, **characterised in that** the carbon composite material comprises 60 to 75% by weight silicon carbide, 15 to 40% by weight carbon and 0.5 to 10% by weight free silicon.

14. Mechanical seal arrangement as claimed in any one of the preceding claims, **characterised in that** on the slide surface (41) made from carbon composite material are formed graphite-containing regions, in particular with a Rockwell hardness of 50 to 100 HR15T, which are arranged to receive free particles.

15. Power station feed pump comprising a mechanical seal arrangement as claimed in any one of the preceding claims.

## Revendications

1. Ensemble de joints d'étanchéité à bagues de glissement comprenant :
- une bague de glissement (2) rotative avec une première surface de glissement (40) et une bague de glissement (3) stationnaire avec une deuxième surface de glissement (41), qui délimitent entre elles une fente d'étanchéité (4),
- dans lequel la première et la deuxième surface de glissement présentent des duretés différentes,
**caractérisé en ce que**
- la surface de glissement plus dure présente un revêtement en diamant (20), et la surface de glissement plus souple est fabriquée à partir d'un matériau composite de carbone, dans lequel le matériau composite de carbone est un matériau composite de carbure de silicium et de graphite comprenant du carbure de silicium, du graphite et un silicium libre, et
- une rugosité de départ (Rₐ1) moyenne de la première surface de glissement (40) du revêtement en diamant (20) est inférieure à une rugosité de départ (Rₐ2) moyenne de la deuxième surface de glissement (41) en matériau composite de carbone.

2. Ensemble de joints d'étanchéité à bagues de glissement selon la revendication 1, **caractérisé en ce que** la rugosité de départ (Rₐ1) moyenne de la bague de glissement avec le revêtement en diamant (20) est inférieure d'au moins 50 % à la rugosité de départ (Rₐ2) moyenne de la bague de glissement en matériau composite de carbone.

3. Ensemble de joints d'étanchéité à bagues de glissement selon la revendication 2, **caractérisé en ce que** la rugosité de départ (Rₐ1) moyenne du revêtement en diamant (20) est comprise dans une plage allant de 0,01 µm à 0,06 µm, et/ou **en ce que** la rugosité de départ (Rₐ2) moyenne de la surface de glissement en matériau composite de carbone est comprise dans une plage allant de 0,1 µm à 0,2 µm.

4. Ensemble de joints d'étanchéité à bagues de glissement selon l'une quelconque des revendications précédentes, **caractérisé en ce que** le revêtement en diamant (20) présente un dopage (23) de telle manière que le revêtement en diamant (20) est électroconducteur.

5. Ensemble de joints d'étanchéité à bagues de glissement selon la revendication 4, **caractérisé en ce que** le dopage (23) est un dopage de bore.

6. Ensemble de joints d'étanchéité à bagues de glissement selon l'une quelconque des revendications précédentes, **caractérisé en ce que** le revêtement en diamant (20) de la bague de glissement est prévu en plus au niveau d'une zone périphérique (20a) extérieure de la bague de glissement.

7. Ensemble de joints d'étanchéité à bagues de glissement selon la revendication 6, **caractérisé en ce que** le revêtement en diamant (20) est prévu seulement en partie au niveau de la zone périphérique (2a) extérieure de la bague de glissement, et en particulier le revêtement en diamant présente, au niveau de la zone périphérique (2a) extérieure, une zone (20a) se rétrécissant.

8. Ensemble de joints d'étanchéité à bagues de glissement selon la revendication 6 ou 7, **caractérisé en ce qu'**une bague de support (7) recouvre au moins en partie le revêtement en diamant prévu au niveau de la zone périphérique (2a) extérieure de la bague de glissement (2).

9. Ensemble de joints d'étanchéité à bagues de glissement selon l'une quelconque des revendications 6 à 8, **caractérisé en ce que** le revêtement en diamant de la bague de glissement est prévu en plus au niveau d'une zone périphérique (2b) intérieure de la bague de glissement.

10. Ensemble de joints d'étanchéité à bagues de glissement selon l'une quelconque des revendications précédentes, **caractérisé en ce que** la surface de glissement (40) du revêtement en diamant (20) est polie.

11. Ensemble de joints d'étanchéité à bagues de glissement selon l'une quelconque des revendications précédentes, **caractérisé en ce que** la bague de glissement (2) rotative présente le revêtement en diamant (20).

12. Ensemble de joints d'étanchéité à bagues de glissement selon l'une quelconque des revendications précédentes, **caractérisé en ce que** la surface de glissement (40) du revêtement en diamant (20) présente un pourcentage de portée ≥ 50 %.

13. Ensemble de joints d'étanchéité à bagues de glissement selon l'une quelconque des revendications précédentes, **caractérisé en ce que** le matériau composite de carbone comprend 60 à 75 % en poids de carbure de silicium, 15 à 40 % en poids de carbone et 0,5 à 10 % en poids de silicium libre.

14. Ensemble de joints d'étanchéité à bagues de glissement selon l'une quelconque des revendications précédentes, **caractérisé en ce que** des zones contenant du graphite, en particulier avec une dureté Rockwell allant de 50 à 100 HR15T, sont réalisées au niveau de la surface de glissement (41) en matériau composite de carbone, lesquelles sont mises au point pour recevoir des particules libres.

15. Pompe d'alimentation de centrale électrique comprenant un ensemble de joints d'étanchéité à bagues de glissement selon l'une quelconque des revendications précédentes.
